# EUROPEAN PATENT SPECIFICATION

(11) **EP 1 202 812 B1**
(45) Date of publication and mention of the grant of the patent: **09.05.2007**
(21) Application number: 00946175.7
(22) Date of filing: 20.07.2000
(51) Int. Cl.: B03C 5/02, G01N 15/10

(54) **TRAVELLING WAVE DIELECTROPHORETIC APPARATUS AND METHOD**
APPARAT FÜR WANDERFELD-DIELEKTROPHORESIS UND VERFAHREN
APPAREIL DE DIELECTROPHORESE A ONDE PROGRESSIVE ET PROCEDE CORRESPONDANT

(30) Priority: 20.07.1999 GB 9916848
(43) Date of publication of application: 08.05.2002
(73) Proprietor: University Of Wales, Bangor, Bangor, Gwynedd LL57 2DG (GB)
(72) Inventor: Lock, Gary Michael, Feltham Middlesex TW13 4PS (GB); Pethig, Ronald Lleyn, Anglesey Gwynedd LL59 5DT (GB)
(74) Representative: Gallafent, Richard John
(86) International application number: PCT/GB2000/002804
(87) International publication number: WO 2001/005514

(56) References cited:
- WO-A-91/11262
- WO-A-97/27933
- X.B.WANG ET AL: "Dielectrophoretic Manipulation of Cells with Spiral Electrodes" BIOPHYSICAL JOURNAL , vol. 72, April 1997 (1997-04), pages 1887-1899, XP000911932 cited in the application
- MASUDA S ET AL: "MOVEMENT OF BLOOD CELLS IN LIQUID BY NONUNIFORM TRAVELING FIELD" IEEE TRANSACTIONS ON INDUSTRY APPLICATIONS,US,IEEE INC. NEW YORK, vol. 24, no. 2, 1 March 1988 (1988-03-01), pages 217-222, XP002025002 ISSN: 0093-9994

## Description

This invention relates to an apparatus and method of using the technique of dielectrophoresis, and relates particularly to an arrangement for concentrating or diluting or transporting or separating or detecting or characterising particles.

The technique of dielectrophoresis (DEP) is described in the book "Nanotechnology in Medicine and the Biosciences", Ed RRH Combs and D W Robinson, published by Gordon & Breach, Amsterdam, chapter 11 by Ronald Pethig, especially pages 153 to 168. Dielectrophoresis is the movement of particles in non-uniform electric fields. Unlike electrophoresis, charges on the particle itself are not necessary for the effect to occur and AC rather than DC fields are employed.

When an electric field is applied to a system consisting of particles suspended in a liquid medium, a dipole moment is usually induced in each particle as a result of electrical polarisations forming at the interfaces that define their structure. If an alternating current (AC) electric field is applied, the induced dipole moment is generally out of phase with the field, and to describe this the dipole moment is defined as a vector having an in-phase (real) and an out-of-phase (imaginary) component. If the field is non-uniform, the particles experience a translational force, known as a dielectrophoretic force, of magnitude and polarity dependent on the electrical properties of the particles and their surrounding medium. This force is also a function of the magnitude and frequency of the applied electric field. Conventional DEP is used with stationary fields, and the particles experience an in-phase (real) DEP force.

In a paper by Kaler et al, Biophys. J., Volume 63, July 1992, pages 58 to 69, signals of different frequencies are applied to a single pin electrode so that a particle simultaneously experiences positive and negative DEP forces; such an arrangement can be used to characterise particles, but not separate them.

Another application of the technique of DEP is described in WO 98/04355, British Technology Group, in which a particle-containing liquid is caused to flow over a comb-like array of electrodes to which signals at different frequencies are applied; particles of different characteristics are urged preferentially towards or away from different DEP regions of the array, so that the particles can be characterised. A flowing fluid and conventional DEP with static field are used.

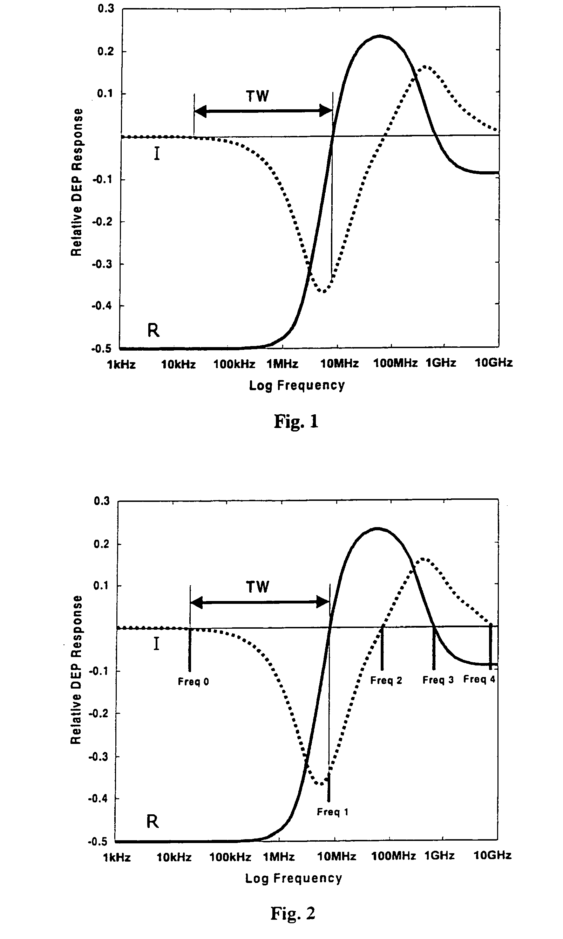

The technique of travelling wave DEP is also described by Pethig, chapter 11, pages 161 to 165. Signals at different phases are applied to a spaced array of electrodes so as to produce a travelling electric field. It is explained by Pethig, with due reference to the work of others in the field, in particular Y Huang et al "Electrokinetic behaviour of colloidal particles in travelling electric fields: studies using yeast", J. Phys D: Appl. Phys., 26, pages 1528 to 1535, 1993, that in order for travelling wave DEP (TWD) to occur in a travelling field, the particle must experience a negative real-component of the DEP force, pushing it away from the electrodes and thus levitating it above them. There must also be an imaginary component to the DEP force for TWD to occur, so that the particle will experience a translational movement in the field. The imaginary component of the DEP force in a static AC electric field manifests itself as a rotational torque via a particle, and the frequency variation of this component can be obtained by subjecting the particle to a rotating electric field and measuring its electrorotation response. The frequency range over which TWD is possible is indicated as TW in Figure 1 which illustrates the principle of conventional TWD at a single frequency on a single particle type. TW can be considered as the travelling wave window for the particle. Within this window the particle will travel at different speeds dependant upon the level of the imaginary component of the force I, as well as the levitation height of the particle that results from the real part of the force R. The profile of the travelling speed for a particle within the travelling wave window is referred to as the travelling wave "envelope".

Throughout this specification, the term "particle" is used to include biological cells, bacteria, viruses, parasitic microorganisms, DNA, proteins, biopolymers, non-biological particles, or any other particle which may be suspended in a liquid, either as individual or combined entities in which a dielectrophoretic force can be induced. It also applies to chemical compounds or gases dissolved or suspended in a liquid, where a dielectrophoretic force can be induced.

According to the invention, a DEP method of separating particles of more than one type is characterised by the features set ot in the main claim.

In one arrangement, the second frequency is selected so that the range of frequencies delimiting the travelling wave window (as defined above) of the particles is made narrower or wider. The second frequency can be selected to generate a stationary DEP field which is either positive or negative, a TWD field with the imaginary part of the force substantially equal to zero, or a TWD field with the real part of the force substantially equal to zero.

Alternatively, the second frequency is selected so that the levitation height of the particles above electrodes applying the dielectrophoretic force is varied. The second frequency can be selected to generate a stationary DEP field which is either positive or negative, or a TWD field with the imaginary part of the force substantially equal to zero.

In another arrangement, the second frequency is selected so that two particle types travel simultaneously, the particle types being such that only one type would travel on application of the first frequency.

In another arrangement, the second frequency is selected so that of two particle types, one type is held by the electrodes, while the other type travels, the particle types being such that both types would travel on application of the first frequency.

In another arrangement, the second frequency is selected so that the relative travelling speeds of two different particle types is increased, usually by applying a second frequency such that one particle type experiences a significant imaginary component of the TWD force.

Optionally, a third frequency may be applied to achieve the required effect, the third frequency also being such as to generate a static or TWD field.

In another arrangement, the second frequency is selected so that particle types travel in opposite directions which, on application of the first frequency only, would travel in the same direction. The second frequency preferably generates a TWD field having strong real and imaginary components, and it is highly likely that a third frequency will be applied to achieve the required result.

In all arrangements, a third or more particle types may be present, and a third or more frequencies may be applied.

Arnold and Zimmermann in US Patent 4801543 "Process and device for the differentiation of particles in a medium" describe a technique in which two counter-opposed rotating electrical fields are applied to a suspension of particles. This has the result that different types of particle exhibit different rates of rotation around their axes of rotation. According to this present invention, stationary and travelling electric fields are superimposed so as to change the translational motion of particles in suspension.

WO 91/11262 discloses a method for manipulating particles by subjecting them to two or more stationary dielectrophoresis forces, acting either together or separately. It does not teach the method disclosed in this present invention of manipulating particles using travelling electric fields, or of altering the dielectrophoretic response of the particles by superimposing, on to a travelling electric field force, a second dielectriophoresis or travelling field force.

US-A-5489506 describes a method and apparatus in which a series of electrodes in a chamber are energised separately and in sequence at different electrical frequencies. The purpose is to deflect cells as they flow past the electrodes, so as to physically separate different cell types into separate flow paths. Each electrode creates a stationary dielectrophoretic force on the cells, because the electrodes are spaced apart down the flow path, superposition of the different dielectrophoretic forces does not occur. US 5489506 does not teach a method, as disclosed in this present invention, for altering the travelling wave dielectrophoresis of particles by simultaneously superimposing a second dielectrophoresis force signal on to the same electrodes.

The invention will now be described by way of example only with reference to the accompanying drawings in which:
Figure 2 illustrates five possible additional second frequencies.
Figure 3 illustrates the effect of increasing magnitudes of a selected second frequency F2 on a single particle type.
Figure 4 illustrates the principal separation of two particle types by conventional TWD at a single frequency, and is a reference Figure.
Figure 5 illustrates the effect on the Figure 4 arrangement of adding a second signal at frequency F6.
Figure 6 is a reference Figure similar to Figure 4.
Figure 7 illustrates the effect of adding a second frequency F8 to the Figure 6 arrangement.
Figure 8 illustrates the effect of adding a third signal to the Figure 6 arrangement.
Figure 9 shows schematically a TWD apparatus, and
Figure 10 shows experimental electrorotation ROT and dielectrophoresis DEP data for yeast cells.
Figure 11 depicts the electrode array design used to obtain travelling wave dielectrophoresis (TWD) spectra, using a set of parallel rectilinear electrodes.
Figure 12 shows experimental TWD data for yeast cells, for the cases where no additional second signal is applied (A) and where a stationary DEP field at 2 kHz is superimposed (B) on the TWD signal. The cells exhibit fundamentally unstable (FUN) behaviour in the frequency range X.
Figure 13 shows experimental TWD data for yeast cells, for the case where (A) no additional second signal is applied, and for the cases where an additional stationary DEP field at 400 kHz (B) or 10 MHZ (C) is applied.

In Figures 1 to 8, the expected dielectrophoretic response for the particles is shown, the particles being suspended in a medium of conductivity 2mS/cm.

In Figure 1, taken from the prior art, the effect on red blood cell (rbc) particles of the application of a dielectrophoretic field over a wide range of frequencies is shown. The real component R and the imaginary component I of the DEP force are plotted on an arbitrary scale against log frequency.

As is well-known, application of a stationary field is referred to as conventional DEP and only the real component of the DEP force is exploited. With TWD, both the real and the imaginary components of the force are exploited.

Consider now the effect of applying an additional signal at a second frequency. In Figure 2, the frequencies of five possible additional signals are shown by the arrows on the general dielectrophoresis spectrum; the Figure is a reference Figure, none of the frequencies F0 to F4 is applied to the spectrum.

At frequency F0, there is a high negative real part and no imaginary part.

At frequency F1, there is no real part and a high negative imaginary part.

At frequency F2, there is high positive real part, and no imaginary part.

At frequency F3, there is no real part, and a high positive imaginary part.

At frequency F4, there is a negative real part, and no imaginary part.

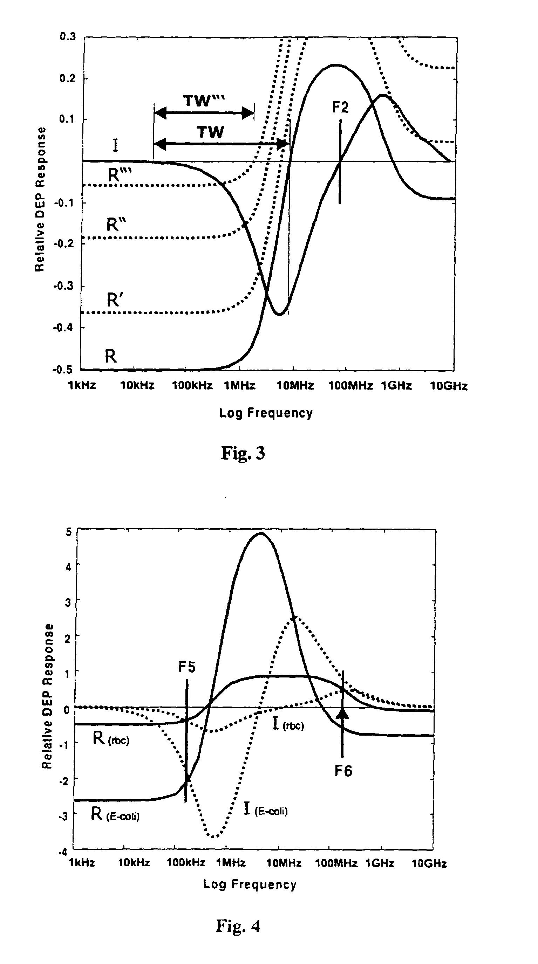

The effect of applying an additional signal at frequency F2 on the red blood cell (rbc) spectrum is shown in Figure 3. The signal is now indicated by a line to indicate actual application. The imaginary part I shown dotted is unchanged because at frequency F2, there is no imaginary component (I = 0), but the additional signal causes the real part R, which is positive at frequency F2, to becoming more positive accordingly to the amplitude of the signal F2, as shown by the chain dotted lines R', R", R'", etc. The increase in value is proportional to the square of the voltage of the applied signal F2.

As the amplitude of signal F2 increases, the real part R of the net DEP force becomes more positive R', R", R"'. The travelling wave window becomes narrower, as indicated by the arrow TW" corresponding to the real part R2". The particles therefore travel over narrower ranges of applied frequency, which results in increased selectivity and sensitivity to the control and characterisation of the particle.

Alternatively, by selection of the appropriate conditions, the TW window can be widened to decrease sensitivity. Referring to Figure 2, this could be achieved by applying a second signal at frequency F0.

In another variation, the levitation height of the particles above the DEP electrodes can be varied. One way to achieve this, see Figure 2, is by applying a travelling field signal of frequency F0 or F2, i.e. a signal where the real part of the DEP force is either positive or negative, and the imaginary part is zero, the levitation height of particles above the DEP electrodes can be varied.

Alternatively, a stationary DEP field can be used, i.e. one which induces only a real and no imaginary DEP component. Referring again to Figure 2, any frequency below F1 will apply a negative DEP force, thus increasing the levitation height of the particles above the electrodes. Similarly, any frequency between F1 and F3 will apply a positive DEP force, thus reducing the levitation height of the particles.

As a further variation for adjusting the levitation height of a particle, any frequency which has a real positive or negative component and additionally an imaginary component may be used. However, using such a frequency results in changing the imaginary component having a direct effect on the travelling speed of the particle, and so this is generally not preferred. Stationary DEP fields are preferred for varying the levitation height of particles above the DEP electrodes.

Controlling the levitation height of particles in a TWD field offers several advantages. As shown by Hughes et al in the paper "Dielectrophoretic forces on particles in travelling electric fields", J. Phys. D: Appl. Phys. 29, pages 474-482, 1996, the translational force acting on a particle in a TWD field varies significantly as a function of the height of the particle above the electrode plane. Furthermore, under the influence of electrical phase distortion effects, this force reverses in direction for heights very close to the electrode plane and produces fundamentally unstable (FUN) electrokinetic effects as first described by Huang et al in J. Phys, D: Appl. Phys, 26, pages 1528-1535, 1993. These levitation height dependent effects have been further studied by Wang et al, Biophysical Journal 72, pages 1887-1899, 1997. Being able to control particle height within a travelling field leads to new means for particle characterisation and particle separation.

Without use of this invention, such control of particle height is not possible.

The inventive technique has a practical application in particle separation. Figure 4 shows the real and imaginary parts of the DEP spectra of red blood cells and E-coli bacteria. Inspection shows that the travelling wave window for both particles is similar, about 20 kHz to 600 kHz. In a conventional arrangement for separation of these two particle types, TWD would be applied at a frequency of about 200 kHz. A line F5 is shown on Figure 4 at this frequency; at 200 kHz, the E-coli cells experience much stronger levitational (negative real part R) and translational (imaginary part I) forces than the red blood cells, and would therefore be caused to move relatively rapidly in the TWD field while the blood cells would move relatively slowly. However, for effective separation, a very long TWD electrode array would be needed for efficient separation, particularly if high particle concentrations are employed.

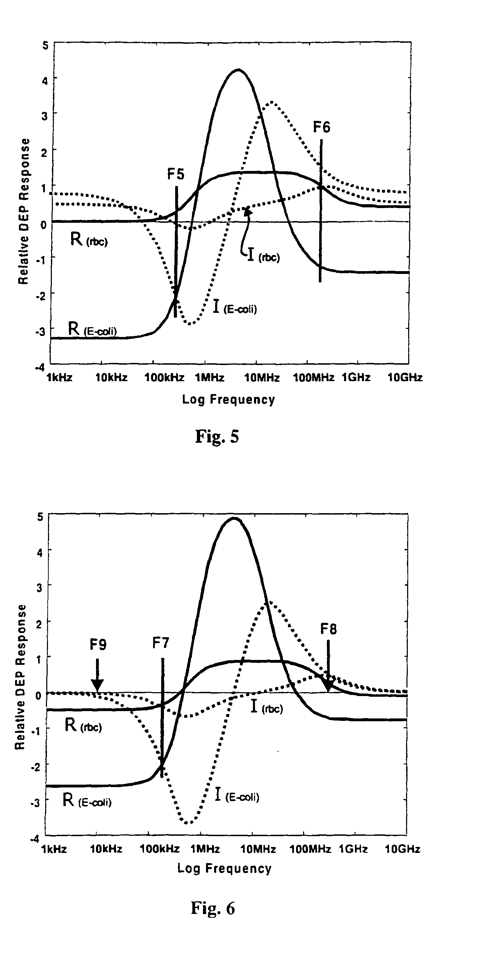

In contrast, suppose that the difference in DEP properties of the two particle types is magnified. This can be achieved by the application of a second frequency and reference Figure 4 indicates by the arrow F6 a possible value of this signal frequency. Figure 5 shows the effect on the spectra of applying an additional signal at frequency F6; the real component of the blood cells and the imaginary components of both cell types are positive at this frequency and therefore have been shifted upwards, while the real component of blood cells is negative at this frequency and has been shifted downwards. The effect of applying a second TWD frequency F5 is that the blood cells now experience a small positive DEP force and will be attracted to the electrodes and will not be levitated. The blood cells will therefore not travel in the TWD field. The E-coli cells will experience a negative DEP force and an imaginary component of the force, and will therefore travel in the TWD field. Effective particle separation is therefore possible because only one particle type travels.

The frequency F5 is a conventional travelling field signal applied at different phases, e.g. 0°, 90°, 180°, 270°, and at arbitrary equal amplitudes. The second frequency F6 is similarly a conventional travelling wave signal.

In a variation, the second frequency signal may be applied as a stationary field, e.g. at phases of 0° and 180°, which will affect the real component of the DEP spectrum, while the imaginary component remains unchanged.

In an important variation, the second signal may be applied as a travelling field of reversed polarity, which will change the polarity of the imaginary component of the DEP spectrum, with the real component remaining unchanged.

Figure 6 is a reference figure similar to Figure 4; close inspection will show that frequency F7 in Figure 6 is slightly lower in value than F5 in Figure 4, and frequency F8 is slightly higher in value than F6 in Figure 4.

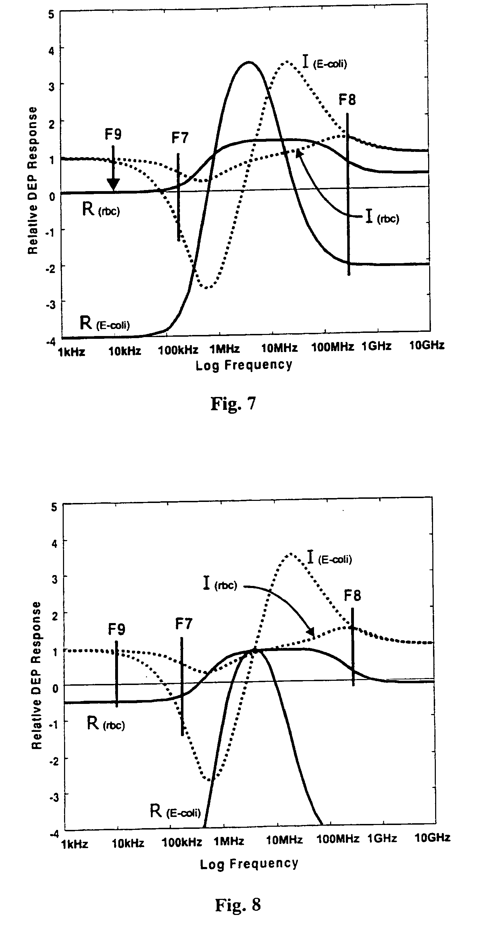

If the signal at frequency F8 is applied to achieve a DEP force of twice unity height, with reference to the spectra shown in Figure 6, the result is that illustrated in Figure 7. At frequency F8, the imaginary components for both blood and E-coli are positive and the real component for blood is positive, and therefore all increase in value. The real component of E-coli is negative and decreases in value. As shown in Figure 7, frequency F7, the TWD frequency, the effect is that the imaginary component for the blood cells has changed from a negative to a positive value, but the real component for blood is no longer negative, thus the blood cells do not levitate and TWD is not possible.

Consider now the application of a third signal at unity amplitude and frequency F9 (see Figure 6). The result is shown in Figure 8. At frequency F7, the effect of applying the three frequencies F7, F8 and F9 is that the real part of the net DEP force for both particles is negative, and that both particles have an imaginary component to their DEP force. The blood cells have a small negative imaginary component, while the E-coli have a positive imaginary component. The TWD conditions are therefore met for both particle types but the blood cells and E-coli will travel in opposite directions because their imaginary components are of different sign. Improved separation of the two particle types therefore results.

As a variation, a reverse phase travelling field signal may be used in the examples in Figures 5 to 8. A reverse phase travelling field signal is achieved, for example, by swapping the 90° and 270° relative phases of a quadrature phase signal. The effect of applying such a signal is to invert (i.e. reverse polarity, but same magnitude) the imaginary part of the dielectrophoretic force, while leaving the real part of the force unchanged; the translational TWD force resulting from the two fields are now in opposite directions.

Referring again to Figure 4, suppose frequency F6 is applied in reverse phase. The TWD translational force arising from the imaginary parts I for red blood cell (rbc) and E-coli forces would now be reversed, while the real part of the force remains negative for the E-coli and positive for rbc. Using combinations of forward and reverse phase travelling fields and stationary fields, improved particle manipulation and separation can result.

In another variation, in certain conditions, the application of a travelling field can induce a significant hydrodynamic fluid movement, which is known. It has been found that by applying a second frequency signal to induce such hydrodynamic fluid movement in conjunction with a first frequency TWD signal, improved particle separation can result.

For example, suppose two particle types are to be separated, one type experiencing strong and the other relatively weak TWD translational movement; an example is E-coli and rbcs as shown in Figure 4. Applying frequency F5 and, in addition, applying a second (usually lower) frequency signal to induce hydrodynamic fluid movement in reverse direction and of specific magnitude such that the red blood cells may be moved predominantly by fluid flow, while the E-coli travel in the opposite direction by TWD forces. A travelling field of 10 kHz can be used to induce such fluid movement. The second frequency travelling field signal will alter the magnitude of the real and/or imaginary components of the TWD forces on the particles, as well as additionally inducing the hydrodynamic fluid movement.

Applying travelling fields of two or more frequencies can therefore be used to separate particles by a combination of hydrodynamic and TWD forces, with the first frequency signal chosen to induce the desired TWD forces on the particles and the second frequency signal chosen to induce significant hydrodynamic fluid movement. Preferably, the travelling field signals to induce the combination of hydrodynamic and TWD forces is applied to the same TWD electrodes.

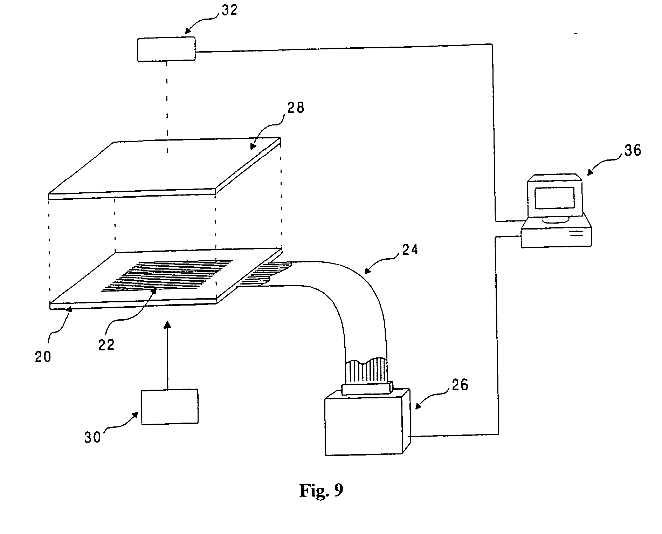

In Figure 9, a general apparatus for TWD is illustrated. A glass substrate 20 has on its upper surface an array 22 of parallel electrodes, each of which is connected by a multiple connector 24 to a signal generator 26. The substrate 20 can be covered by protective cover 28 (conveniently a second glass substrate), the substrates being separated by a spacer (not shown) to form a thin cell. A suitable spacer is a plastic strip.

The cell is illuminated from below by a light source 30, and is viewed from above by an optical microscope/video recorder 32 connected to a display screen 36.

In use, a suspension of particles in a liquid is injected into the cell or the suspension can be placed directly on the substrate 20 and the cover 28 put into place. The signal generator 26 is arranged to apply signals of different phases to the electrodes in the array 22. For example, the signal generator 26 may be a four phase sinusoidal signal generator, connecting successive electrodes to signals of relative phase 0°, 90°, 180° and 270°, and then repeating the cycle across the whole array 22. As is well-known, such an array generates travelling wave DEP conditions.

The cell is illuminated by the light source 30 and is viewed on the screen 36. In transmission, particles will be seen as distinct areas, and their movement can be clearly seen on the screen.

All of the multi-phased signals of the two or three different frequencies are electrically summed to each other in the required phase and then applied to the electrode array 22.

The electrodes may be of any form in order to apply the desired TWD field. The electrodes may be formed on one or more substrates, on the inner or outer walls of a dielectrophoresis cell, or on opposite faces of a dielectrophoresis cell. The electrode arrays may be in the form of wires which pass between substrates. The TWD electrode arrays of three or more electrodes may be used in conjunction with an additional electrode or electrode array to apply static DEP or electrostatic forces. The two sets of electrodes may be mounted in the same plane, or mounted in such a way that the static DEP or electrostatic forces generated are in a different plane to that of the travelling field. Further additional forces may be applied in conjunction with the TWD field, such as fluid flow, optical, magnetic, centrifugal gravity, including mechanical or physical movement of the dielectrophoretic cell, or any other force which may aid a separation or characterisation of one or more particles.

In a further example, two TWD arrays can be mounted at an angle to each other. The same or different frequencies may be applied to these arrays. Where different frequencies are applied, they may be chosen such that they excite different parts of the dielectrophoresis spectrum. Different particles will thus be affected differently, and as differing forces are applied at differing angles relative to each other, differing particles will travel in differing directions and at different angles relative to a reference point. The angle at which the particle travels will be the result of the combined forces. This allows for extremely sensitive characterisation or separation of particles, with the particles being manipulated by intersecting travelling fields.

To further aid with particle separation, and means of a further example, the particles themselves may be altered by means such as: the stressing or damaging of one or more particle types, for example the lysing or stressing of red blood cells; the varying of the temperature to selectively stress particles; chemical agents or proteins added to the solution; conductivity, permittivity, pH, or other physiological content of the suspending medium altered; additional particles attached to the mentioned particles. All of these allow for increased differentiation of particles by altering their dielectrophoresis spectra, allowing improved characterisation, manipulation and/or detection by means of the invention.

An example will now be given of the practical application of widening a TWD window as described with reference to Figures 2 and 3.

At present, without use of the inventive arrangement, TWD can only be utilised over a relatively narrow frequency region or window of the complete spectrum. A dielectrophoresis spectrum for a particular particle can be considered as having a number of different regions corresponding to particular properties of the particle. Different particles exhibit different dielectrophoresis spectra and it is therefore clearly of benefit to extend the frequency range over which TWD may be undertaken.

As an initial example, experiments were performed on yeast cells *(Saccaromyces cerevisiae,* strain RXII) because their electrokinetic properties have been thoroughly investigated by several laboratories. The cells were grown for 19 hours in a medium of pH 5 consisting of 5% sucrose (Oxoid), 0.5% yeast extract (Oxoid) and 0.5% peptone (Oxoid) at 30°C in an incubator-shaker operating at 200 rpm. On harvesting, the cells were centrifuged at 100g for 5 min and washed in 280 mM mannitol, this process being repeated two more times, before their final suspension in 280 mM mannitol. The conductivities of the cell suspension mediums were adjusted by adding NaCl as determined using a Whatman (model CDM 4010) conductivity meter.

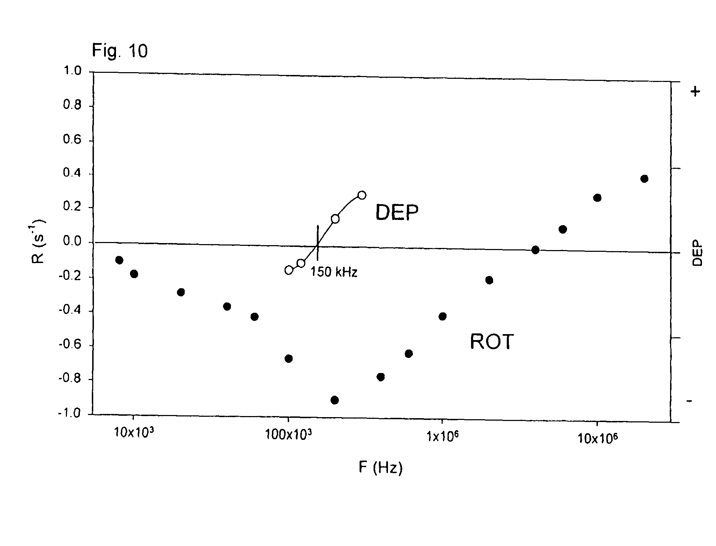

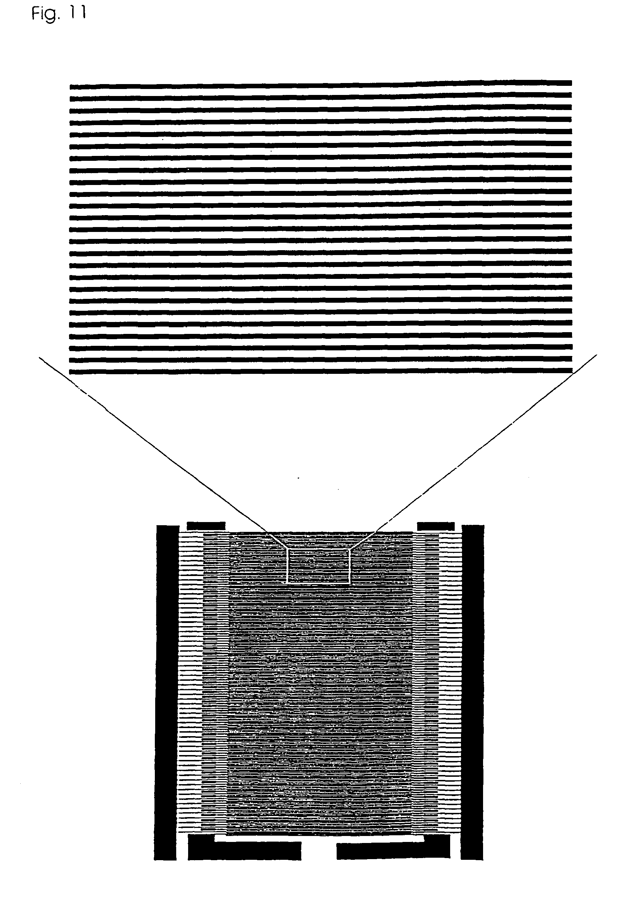

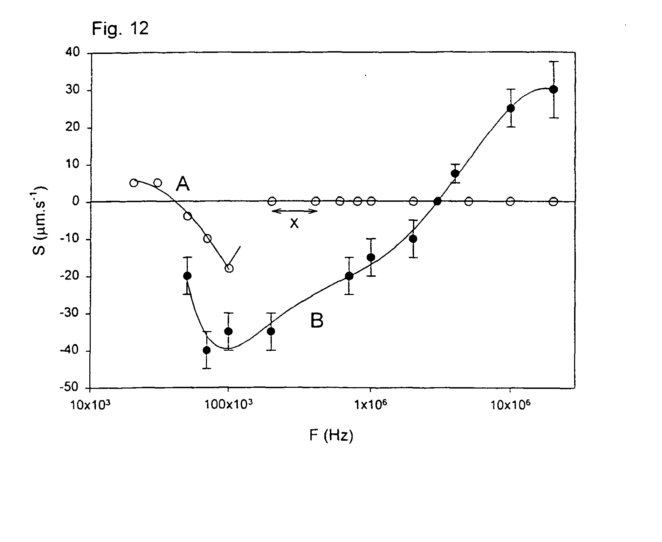

Electrorotation (ROT) and dielectrophoresis (DEP) measurements were obtained for the yeast cells using the method described by Huang *et al,* Phys. Med. Biol. 37, 1499-1517, 1992. A typical electrorotation spectrum for a medium conductivity of 10.1 mS/m is shown in Figure 10, together with the dielectrophoresis (DEP) response over the narrow frequency range where the DEP force changes from negative to positive. TWD velocity measurements were made on the yeast cells, using the electrode design shown in Figure 11. The parallel electrodes were of equal width and spacing (20 microns) and the travelling electric fields were generated by sequentially addressing the electrodes with sinusoidal voltages of phase separation 0°, 90°, 180° and 270°. A typical TWD spectrum, for a medium conductivity of 10.1 mS/m and with no additional signal applied to the electrodes, is shown in Figure 12. Phase quadrature voltages of 0.6 Vrms were applied between 20 kHz and 20 MHz. Below 40 kHz, as a result of fluid motion induced by an electrohydrodynamic effect, the cells moved over the electrodes at a velocity of around 5 microns/sec in the same direction as the travelling field. True TWD motion was observed between 50 kHz to 100 kHz, with the cells moving in the opposite direction to the travelling field. Between 200 kHz to 400 kHz the phenomena of cell spinning and erratic, rapid, co-field movement that characterises the so-called FUN regime was observed. Above 400 kHz, the cells were trapped at the electrodes and did not exhibit TWD. The direction of TWD motion shown in Figure 12 mirrors the electrorotation spectrum shown in Figure 10, whilst the upper frequency of the TW window coincides with the value where the DEP force changes from being negative, so as to levitate the cells, to one that is positive and results in trapping of the cells.

The effect of adding a static DEP signal to the travelling wave field was then investigated. This was accomplished by addressing adjacent electrode pairs with sinusoidal 1.2 Vrms signals in phase opposition (0° and 180°) at a frequency of 2 kHz. Referring to Figure 2, this corresponds to adding a signal at frequency 'Freq 0', to give an additional negative DEP force to increase the levitation height of the cells, but with little or no effect on the imaginary force component. The effect of increasing the levitation height by this means is shown in Figure 12. The TWD window is increased, to cover the full frequency range explored, with the direction and magnitude of cell motion mirroring the electrorotation spectrum shown in Figure 10.

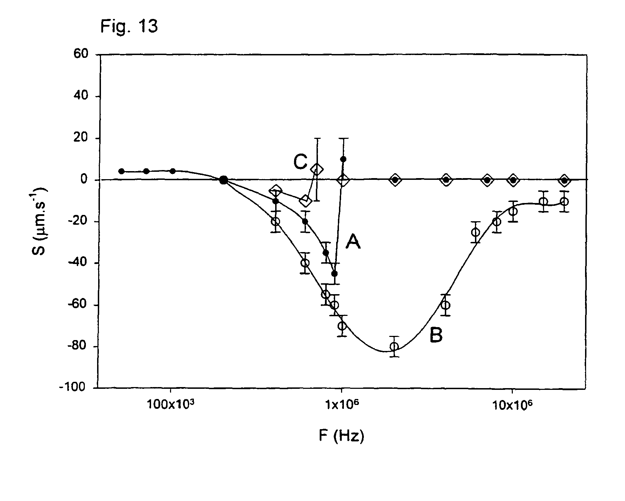

Further results, to demonstrate that the TW window can be extended or shortened in frequency range, are shown in Figure 13 for yeast cells suspended in a medium of conductivity 40.18 mS/m. The travelling wave was generated using 1.2 Vrms phase quadrature signals and, with no additional signal applied, the TW window extended from 30 kHz to 90 kHz, with the FUN regime and subsequent cell trapping commencing at around 1 MHz. As shown in Figure 13, the TW window was narrowed to the range 30 kHz to 60 kHz on applying a 10 MHz, 0.6 Vrms, DEP signal (equivalent to adding frequency 'Freq 2' in Figure 2). Whereas, by adding a 1.2 Vrms, 400 kHz, DEP signal the TW window was extended up to 20 MHz. A reversal of the TWD velocity did not occur because, by using an additional signal at 400 kHz (equivalent to a frequency between "Freq 0" and "Freq 1" in Figure 2), the cells also experienced an extra, negative, imaginary force component.

By application of the inventive technique of applying a TWD force and a second signal at a frequency which modifies the TWD force, several advantageous results can be achieved, including:
a) separation of cells to high specificity for identification and enumeration;
b) separation of rare target cells from heterogenous samples, avoiding cell loss with a process that uses only one procedure;
c) processing of samples at high cell sorting rates;
d) separation of cells without the need for biochemical labelling or modification;
e) isolation of viable, culturable cells with little or no biological damage;
f) by increasing the travelling wave dielectrophoresis frequency window, the properties of a particle can be characterised or monitored by determining the particle's translational motion as a function of electric field frequency. The same information can be determined as that obtained by electrorotation experiments, but the accurate measurement of particle rotation is more difficult than the determination of translational motion.

## Claims

1. A DEP method for separating particles of more than one type, comprising the steps of generating a first signal being a twDEP signal comprising a plurality iof signals, each at a first frequency and having a predetermined phase relationship therebetween for application by electrode means to a suspension of particles and for effecting a first notional DEP force on the particles having a real part which is negative and an imaginary part, wherein the method further comprises the steps of generating a second signal at a second frequency for application by electrode means to the suspension of particles for effecting a second notional force being different from that of the first notional force, and simultaneously applying by electrode means the twDEP signal and the second signal to the suspension of particles so as to apply a combined DEP force on the particles having a real part and an imaginary part and being different from that of the first notional force.

2. A method according to Claim 1 whereby within a range of first frequencies constituting a travelling wave dielectrophoretic window, the particles experience a travelling wave dielectrophoretic force of which there is a real part which is negative and of which there is also an imaginary part, and wherein the application of the second signal causes the frequency range of the window to vary in width.

3. A method according to Claim 1 in which the frequency of the second signal is selected so that the levitation height of the particles above the electrodes applying the signals is varied.

4. A method according to any one of Claims 1 to 3 in which there are two types of particle in suspension, and the second frequency is selected so that the speed of travel of at least one particle type is varied.

5. A method according to Claim 4 in which the second frequency is selected so that the relative speed of travel of the two particle types is increased.

6. A method according to Claim 5 in which one particle type travels and the other does not.

7. A method according to Claim 4 in which the second frequency is selected so that the relative speed of travel of the two particle types is decreased.

8. A method according to Claim 4 in which the second frequency is selected so that both types of particle travel at the same time.

9. A method according to Claim 4 in which the second frequency is selected so that the two types of particle travel in opposite directions.

10. A method according to any one of Claims 1 to 9 in which the second signal generates a static DEP field.

11. A method according to any one of Claims 1 to 9 in which the second signal generates a second travelling wave dielectrophoretic field.

12. A method according to Claim 11 in which the first and second travelling wave fields are arranged to move the particles in different directions.

13. A method according to Claim 1 in which the second signal is applied at a frequency at which one of said real part and said imaginary part is zero and the other part is positive, so that said other part increases in value in accordance with the strength of the second signal.

14. A method according to Claim 1 in which the second signal is applied at a frequency at which one of said real part and said imaginary part of the force is substantially zero and the other part is negative, so that said other part decreases in value in accordance with the strength of the second signal.

15. A method according to any preceding Claim further comprising applying a third signal at a third frequency whereby either the real part or the imaginary part of the travelling wave dielectrophoretic force on the particles is altered in magnitude.

16. A method according to any one of the preceding Claims for separating unwanted particles from body fluid particles, the suspension of particles containing both unwanted particles and body fluid particles, whereby the speed or direction of travel of one particle type is altered.

17. A method according to Claim 16 in which the unwanted particles are cancer cells and the body fluid particles are blood cells.

18. A method according to Claim 16 in which the unwanted particles are bacteria and the body fluid particles are blood cells.

19. A method according to Claim 18 in which the bacteria are E-coli and the blood cells are red blood cells, the first and second frequencies being selected so that E-coli travels in the TWD field and the red blood cells do not travel.

20. A method according to Claim 18 in which the bacteria are E-coli and the blood cells are red blood cells, further comprising applying a third electrical signal at a third frequency, the first, second and third frequencies being selected so that E-coli travels in one direction in the TWD field and the red blood cells travel in the opposite direction.

21. A method according to any preceding Claim in which the second signal is selected to induce a hydrodynamic fluid movement of said suspension.

22. A method according to any one of the preceding Claims wherein the suspension comprises a suspension of human blood cells, the first signal is a twDEP signal at a frequency of 55 kHz and the second signal is a static DEP signal at a frequency of 55 kHz, whereby the twDEP window extends between 10 kHz and 18 MHz.

23. Apparatus for carrying out the method of any one of Claims 1 to 22, comprising first DEP signal generating means for generating a plurality of signals at a first frequency with a predetermined phase relationship, second signal generating means for generating at least one signal, and electrode means for simultaneously applying said plurality of signals and said at least one signal to a DEP chamber.

24. The apparatus of claim 23 comprising an electrode array on a substrate, frequency operating means, frequency signal generating means, means for electrically summing the two signals from such means and applying the summed signal to the electrode array.

25. Apparatus according to claim 23 or 24 and including at least third signal generating mean for applying at least a third signal to the electrodes.

26. Apparatus according to one of claims 23 to 25 in which the substrate is transparent and further comprising illumination means to illuminate the substrate and viewing means to view any particles on the substrate.

## Patentansprüche

1. DEP-Verfahren zum Abtrennen von Teilchen mehreren Typs, mit der Stufe des Erzeugens eines ersten Signals, das ein twDEP-Signal ist, welches eine Mehrzahl von Signalen beinhaltet, von denen jedes bei einer ersten Frequenz liegt und dazwischen eine vorgegebene Phasenbeziehung aufweist, für das Einwirken auf eine Teilchensuspension durch eine Elektrodeneinrichtung und für das Ausüben einer ersten fiktiven DEP-Kraft auf die Teilchen, die einen realen Teil, der negativ ist, und einen imaginären Teil aufweisen, wobei das Verfahren ferner die Stufen des Erzeugens eines zweiten Signals bei einer zweiten Frequenz für das Einwirken auf die Teilchensuspension durch eine Elektrodeneinrichtung zum Ausüben einer zweiten fiktiven Kraft, die von der ersten fiktiven Kraft verschieden ist, und des gleichzeitigen Einwirkens des twDEP-Signals und des zweiten Signals durch eine Elektrodeneinrichtung auf die Teilchensuspension umfaßt, um auf die Teilchen mit einem realen Teil und einem imaginären Teil eine kombinierte DEP-Kraft auszuüben, die von jener der ersten fiktiven Kraft verschieden ist.

2. Verfahren nach Anspruch 1, bei dem innerhalb eines Bereichs von ersten Frequenzen, die ein dielektrophoretisches Fenster einer Wanderwelle darstellen, die Teilchen eine dielektrophoretische Kraft einer Wanderwelle erfahren, wovon ein realer Teil, der negativ ist, und auch ein imaginärer Teil vorliegen, und worin die Anwendung des zweiten Signals den Frequenzbereich des Fensters veranlaßt, in der Breite zu variieren.

3. Verfahren nach Anspruch 1, bei dem die Frequenz des zweiten Signals derart gewählt wird, daß die Schwebungshöhe der Teilchen über den Elektroden, welche die Signale anwenden, variiert.

4. Verfahren nach einem der Ansprüche 1 bis 3, bei dem in der Suspension zwei Arten von Teilchen vorliegen und die zweite Frequenz derart gewählt wird, daß die Wandergeschwindigkeit mindestens einer Teilchenart variiert.

5. Verfahren nach Anspruch 4, worin die zweite Frequenz derart gewählt wird, daß die relative Wandergeschwindigkeit der zwei Teilchenarten erhöht wird.

6. Verfahren nach Anspruch 5, worin die eine Teilchenart wandert und die andere nicht.

7. Verfahren nach Anspruch 4, worin die zweite Frequenz derart gewählt wird, daß die relative Wandergeschwindigkeit der zwei Teilchenarten vermindert wird.

8. Verfahren nach Anspruch 4, worin die zweite Frequenz derart, gewählt wird, daß beide Teilchenarten gleichzeitig wandern.

9. Verfahren nach Anspruch 4, worin die zweite Frequenz derart gewählt wird, daß die zwei Teilchenarten in entgegengesetzte Richtungen wandern.

10. Verfahren nach einem der Ansprüche 1 bis 9, worin das zweite Signal ein statisches DEP-Feld erzeugt.

11. Verfahren nach einem der Ansprüche 1 bis 9, worin das zweite Signal ein zweites dielektrophoretisches Feld einer Wanderwelle erzeugt.

12. Verfahren nach Anspruch 11, worin das erste und das zweite Wanderwellenfeld derart angeordnet sind, daß sich die Teilchen in verschiedene Richtungen bewegen.

13. Verfahren nach Anspruch 1, worin das zweite Signal bei einer Frequenz angewandt wird, bei welcher der genannte reale Teil oder der genannte imaginäre Teil null und der andere Teil positiv ist, so daß der Wert des anderen Teils entsprechend der Stärke des zweiten Signals zunimmt.

14. Verfahren nach Anspruch 1, worin das zweite Signal bei einer Frequenz angewandt wird, bei welcher der reale Teil oder der imaginäre Teil der Kraft im wesentlichen null und der andere Teil negativ ist, so daß der Wert des anderen Teils entsprechend der Stärke des zweiten Signals abnimmt.

15. Verfahren nach einem der vorstehenden Ansprüche, das ferner die Anwendung eines dritten Signals bei einer dritten Frequenz beinhaltet, wodurch die Größe entweder des realen Teils oder des imaginären Teils der dielektrophoretischen Kraft der Wanderwelle auf die Teilchen in seiner Größe geändert wird.

16. Verfahren nach einem der vorstehenden Ansprüche, zum Abtrennen unerwünschter Teilchen von Körperflüssigkeitsteilchen, wobei die Teilchensuspension sowohl unerwünschte Teilchen als auch Körperflüssigkeitsteilchen enthält, worin die Geschwindigkeit oder die Wanderrichtung einer Teilchenart geändert wird.

17. Verfahren nach Anspruch 16, worin die unerwünschten Teilchen Krebszellen und die Körperflüssigkeitsteilchen Blutzellen sind.

18. Verfahren nach Anspruch 16, bei dem die unerwünschten Teilchen Bakterien und die Körperflüssigkeitsteilchen Blutzellen sind.

19. Verfahren nach Anspruch 18, worin die Bakterien E-coli und die Blutzellen rote Blutzellen sind sowie die erste und die zweite Frequenz derart gewählt werden, daß E-coli in dem TWD-Feld wandert und die roten Blutzellen nicht wandern.

20. Verfahren nach Anspruch 18, worin die Bakterien E-coli und die Blutzellen rote Blutzellen sind, wobei ferner ein drittes elektrisches Signal bei einer dritten Frequenz angewandt wird sowie die erste, die zweite und die dritte Frequenz derart gewählt werden, daß E-coli in dem TWD-Feld in der einen Richtung und die roten Blutzellen in die entgegengesetzte Richtung wandern.

21. Verfahren nach einem der vorstehenden Ansprüche, worin das zweite Signal derart gewählt wird, daß eine hydrodynamische Flüssigkeitsbewegung der Suspension induziert wird.

22. Verfahren nach einem der vorstehenden Ansprüche, worin die Suspension eine Suspension menschlicher Blutzellen enthält, wobei das erste Signal ein twDEP-Signal bei einer Frequenz von 55 kHz und das zweite Signal ein statisches DEP-Signal bei einer Frequenz von 55 kHz ist sowie das twDEP-Fenster sich zwischen 10 kHz und 18 MHz erstreckt.

23. Vorrichtung zur Durchführung des Verfahrens nach einem der Ansprüche 1 bis 22, mit einer ersten Einrichtung zum Erzeugen eines DEP-Signals zum Erzeugen einer Mehrzahl von Signalen bei einer ersten Frequenz mit einer vorgegebenen Phasenbeziehung, einer zweiten Einrichtung zum Erzeugen eines Signals, um mindestens ein Signal zu erzeugen, und mit einer Elektrodeneinrichtung zum gleichzeitigen Einwirken der genannten Mehrzahl von Signalen und des genannten mindestens einen Signals auf eine DEP-Kammer.

24. Vorrichtung nach Anspruch 23, mit einer Elektrodenanordnung auf einem Substrat, einer Frequenzsteuereinrichtung, einer Frequenzsignalerzeugungseinrichtung sowie einer Einrichtung zum elektrischen Summieren der zwei Signale von solchen Einrichtungen und zum Einwirken der summierten Signale auf die Elektrodenanordnung.

25. Vorrichtung nach Anspruch 23 oder 24, mit mindestens einer dritten Einrichtung zum Erzeugen eines Signals zum Einwirken mindestens eines dritten Signals auf die Elektroden.

26. Vorrichtung nach einem der Ansprüche 23 bis 25, in der das Substrat transparent ist und die Vorrichtung ferner eine Beleuchtungseinrichtung zum Beleuchten des Substrats und eine Betrachtungseinrichtung zum Betrachten irgendwelcher Teilchen auf dem Substrat aufweist.

## Revendications

1. Procédé diélectrophorétique de séparation de particules de différents types, comprenant les étapes nécessaires pour engendrer un premier signal, qui est un signal diélectrophorétique à onde progressive formé de plusieurs signaux, chacun à une première fréquence et en relation de phase prédéterminée avec les autres signaux, et qui est appliqué, par des moyens à électrode, à une suspension de particules de manière à exercer une première force diélectrophorétique notionnelle sur les particules, ladite force ayant une partie réelle négative et une partie imaginaire, le procédé comprenant en outre les étapes nécessaires pour engendrer un second signal à une seconde fréquence qui est appliqué, par des moyens à électrode, à la suspension de particules de manière à exercer une seconde force notionnelle différente de la première force notionnelle, et le procédé appliquant simultanément, par les moyens à électrode, le signal diélectrophorétique à onde progressive et 1e second signal à la suspension de particules de manière à appliquer une force diélectrophorétique combinée sur les particules, ladite force ayant une partie réelle et une partie imaginaire et étant différente de la première force notionnelle.

2. Procédé selon la revendication 1 selon lequel, à l'intérieur d'une plage de premières fréquences constituant une fenêtre diélectrophorétique à onde progressive, les particules subissent une force diélectrophorétique à onde progressive, se décomposant en une partie réelle qui est négative et en une partie imaginaire, et dans laquelle l'application du second signal fait varier la largeur de la plage de fréquence de la fenêtre.

3. Procédé selon la revendication 1, dans lequel la fréquence du second signal est sélectionnée pour que varie la hauteur de lévitation des particules au-dessus des électrodes appliquant le signal.

4. Procédé selon l'une quelconque des revendications 1 à 3, dans lequel deux types de particules sont en suspension, et la seconde fréquence est sélectionnée pour que varie la vitesse de déplacement d'au moins un type de particules.

5. Procédé selon la revendication 4, dans lequel la seconde fréquence est sélectionnée pour que soit augmentée la vitesse relative de déplacement des deux types de particules.

6. Procédé selon la revendication 5, dans lequel un type de particules se déplace et l'autre ne se déplace pas.

7. Procédé selon la revendication 4, dans lequel la seconde fréquence est sélectionnée pour que diminue la vitesse relative de déplacement des deux types de particules.

8. Procédé selon la revendication 4, dans lequel la seconde fréquence est sélectionnée de sorte que les deux types de particules se déplacent en même temps.

9. Procédé selon la revendication 4, dans lequel la seconde fréquence est sélectionnée de sorte que les deux types de particules se déplacent en directions opposées.

10. Procédé selon l'une quelconque des revendications 1 à 9, dans lequel le second signal engendre un champ diélectrophorétique statique.

11. Procédé selon l'une quelconque des revendications 1 à 9, dans lequel le second signal engendre un second champ diélectrophorétique à onde progressive.

12. Procédé selon la revendication 11, dans lequel les premier et second champs à onde progressive sont agencés de manière à déplacer les particules dans des directions différentes.

13. Procédé selon la revendication 1, dans lequel le second signal est appliqué à une fréquence à laquelle l'une desdites parties réelle et imaginaire susmentionnées est nulle et l'autre partie est positive, de sorte que la valeur de ladite autre partie augmente avec la force du second signal.

14. Procède selon la revendication 1, dans lequel le second signal est appliqué à une fréquence à laquelle l'une desdites parties réelle et imaginaire susmentionnées de la force est substantiellement nulle et l'autre partie est positive, de sorte que la valeur de ladite autre partie diminue avec la force du second signal.

15. Procédé selon l'une quelconque des revendications précédentes, comprenant en outre l'application d'un troisième signal à une troisième fréquence, de sorte que la partie réelle ou 1a partie imaginaire de la force diélectrophorétique à onde progressive exercée sur les particules change de valeur.

16. Procédé selon l'une quelconque des revendications précédentes pour séparer des particules indésirables de particules normalement présentés dans les fluides corporels, la suspension de particules contenant à la fois les particules indésirables et les particules des fluides corporels, où la vitesse ou la direction de déplacement d'un type de particule est modifiée.

17. Procédé selon la revendication 16, dans lequel les particules indésirables sont des cellules cancéreuses et les particules des fluides corporels sont des cellules sanguines.

18. Procédés selon la revendication 16, dans lequel les particules indésirables sont des bactéries et les particules des fluides corporels sont des cellules sanguines.

19. Procédé selon la revendication 18, dans lequel les bactéries sont des E-coli et les cellules sanguines sont des globules rouges, les première et seconde fréquences étant sélectionnées de sorte que les E-coli se déplacent dans le champ diélectrophorétique à onde progressive et les globules rouges ne se déplacent pas.

20. Procédé selon la revendication 18, dans lequel les bactéries sont des E-coli et les cellules sanguines sont des globules rouges, comprenant en outre l'application d'un troisième signal électrique à une troisième fréquence, les première, deuxième et troisième fréquences étant choisies de sorte que les E-coli se déplacent dans une certaine direction dans le champ diélectrophorétique à onde progressive et les globules routes se déplacent dans la direction opposée.

21. Procédé selon l'une quelconque des revendications précédentes, dans lequel le second signal est sélectionné de manière à créer un mouvement hydrodynamique du fluide de ladite suspension.

22. Procédé selon l'une quelconque des revendications précédentes, dans lequel la suspension se compose d'une suspension de cellules sanguines humaines, le premier signal est un signal diélectrophorétique à onde progressive à une fréquence de 55 kHz et le second signal est un signal diélectrophorétique statique à une fréquence de 55 kHz, et où la fenêtre diélectrophorétique à onde progressive couvre la plage 10 kHz - 18 MHz.

23. Dispositif de réalisation du procédé selon l'une quelconque des revendications 1 à 22, comprenant un système de génération du premier signal diélectrophorétique pour engendrer plusieurs signaux à une première fréquence ayant une relation de phase prédéterminée entre eux, un système de génération du deuxième signal pour engendrer au moins un signal, et un moyen à électrode pour appliquer simultanément lesdits plusieurs signaux et ledit au moins un signal à la chambre de diélectrophorèse.

24. Dispositif selon la revendication 23, comprenant un réseau d'électrodes sur un substrat, des moyens nécessaires à l'utilisation de fréquences, des moyens pour engendrer des signaux de fréquence, des moyens pour effectuer de façon électrique la somme des deux signaux issus de tels moyens et appliquer le signal somme au réseau d'électrodes.

25. Dispositif selon les revendications 23 ou 24 et comportant au moins un moyen pour engendrer un troisième signal pour appliquer au moins un troisième signal aux électrodes.

26. Dispositif selon l'une des revendications 23 à 25, dans lequel le substrat est transparent et comprenant en outre des moyens d'éclairage pour illuminer le substrat et des moyens de visualisation pour observer toute particule présente sur le substrat.
